# EUROPEAN PATENT SPECIFICATION

(11) **EP 3 234 427 B1**
(45) Date of publication and mention of the grant of the patent: **23.10.2019**
(21) Application number: 15801490.2
(22) Date of filing: 19.11.2015
(51) Int. Cl.: F16K 31/04

(54) **VALVE WITH BEARING ISOLATION**
VENTIL MIT LAGERISOLATOR
SOUPAPE AVEC ISOLATEUR POUR PALIER

(30) Priority: 19.12.2014 GB 201422844
(43) Date of publication of application: 25.10.2017
(73) Proprietor: Norgren Limited, Lichfield Staffordshire WS13 6SB (GB)
(72) Inventor: SEALY, Mark Edward Byers, Bidford on Avon Warwickshire B50 4HQ (GB); NARBOROUGH, Christopher Edward, Swadlincote Derbyshire DE12 6JB (GB); BOULT, William Benjamin, Montpelier Bristol B56 5EH (GB); MORRIS, John Michael, Auburn, Washington 98001 (US)
(74) Representative: Range, Christopher William
(86) International application number: PCT/GB2015/053537
(87) International publication number: WO 2016/097678

(56) References cited:
- EP-A2- 0 779 476
- EP-A2- 0 972 918
- US-A- 5 564 461
- US-A- 5 927 682
- US-B1- 6 748 967

## Description

### TECHNICAL FIELD

The embodiments described below relate to fluid control devices and, more particularly, to valves.

### BACKGROUND

Valves, such as butterfly valves, employ rotatable shafts to regulate the flow of fluids flowing in a conduit. The butterfly valves are typically coupled to at least one side of the conduit with the shaft going through a wall of the conduit. Flaps or some other means of regulating the fluid are typically disposed in the conduit and coupled to the shaft. By rotating the shaft, a cross sectional area in the conduit through which the fluid flows changes thereby regulating the flow of the fluid.

Typically, the shaft is rotatably coupled to the conduit via one or more bearings that are subject to conditions in the fluid. For example, the bearings may be coupled directed to the conduit without thermal or fluid isolation. In some prior art, the bearings are disposed in the fluid. In others, the bearings are thermally coupled to the conduit via a metal plate or some other conductor. For relatively cool, lubricating, and non-corrosive fluids, these arrangements of the bearings may be appropriate.

However, in applications where the bearings are subject to adverse conditions, such as high temperatures and corrosion from hot and corrosive gases, such arrangement of the bearings is not appropriate and the bearings will fail. Some of the typical failure modes of the bearings may include fluids leaking out of the conduit or the friction in the bearings increasing to an undesirable level. The bearings may also fail by unexpectedly seizing thereby preventing the shaft from rotating.

What is needed, therefore, is a valve to reliably regulate the flow of fluids. The fluids may have adverse conditions such as high temperatures or corrosiveness. EP 0972918 discloses a continuously variable electrically actuated control valve for high temperature applications, US 5927682 discloses a rotary drive coupler for actuated valve, EP 0779476 discloses a control damper, particularly for hot gases, US 5564461 discloses an assembly for connecting an actuator to a rotary valve and US 6748967 discloses a coupler for joining actuator and valve.

According to the invention, a valve as described in claim 1, a method of forming a valve as described in claim 11 and a method of operating a valve as described in claim 21 are disclosed.

### BRIEF DESCRIPTION OF THE DRAWINGS

The same reference number represents the same element on all drawings. It should be understood that the drawings are not necessarily to scale.
FIG. 1 shows a valve 100 according to an embodiment.
FIG. 2 shows the valve 100 according to an embodiment.
FIG. 3 shows the valve 100 according to an embodiment where portions of the valve 100 depicted in FIGS. 1 and 2 are not shown for illustrative purposes.
FIG. 4 shows the valve 100 according to an embodiment where the isolation gasket 130 and the proximate bearing 310 are shown without the other items described with reference to FIGS. 1-3.
FIG. 5 shows the valve 100 according to an embodiment taken at cross section A-A shown in FIG. 2.
FIG. 6 shows a valve 600 according to an embodiment.

### DETAILED DESCRIPTION

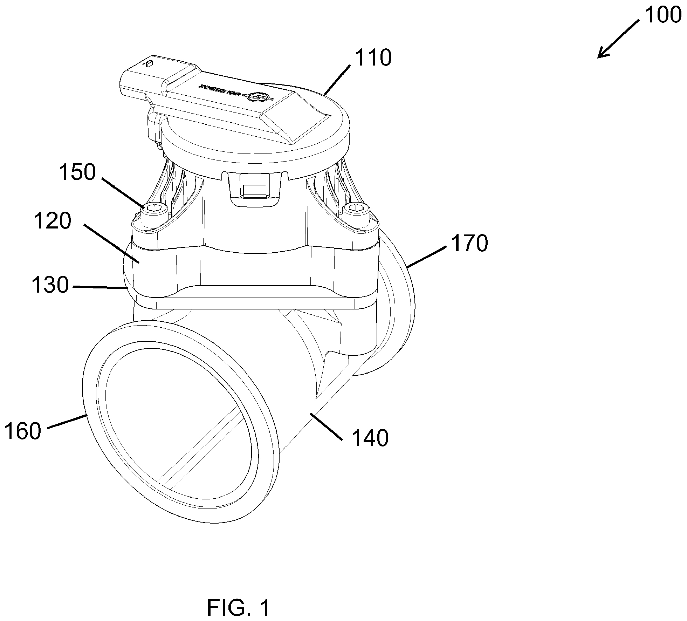

FIGS. 1 - 6 and the following description depict specific examples to teach those skilled in the art how to make and use the best mode embodiments of a valve. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of the valve. As a result, the embodiments described below are not limited to the specific examples described below, but only by the claims and their equivalents.

The inventors realized that low friction bearings were desirable to provide robust performance parameters such as long life, reliability, and low rotational friction. The inventors also realized that using such bearings in the conduits carrying the fluid with adverse conditions presented a considerable challenge given the numerous past failures by others to design a workable solution. The inventors overcame this considerable challenge by providing, among other things, configurations that substantially isolates the bearings.

In one configuration, a cantilever arrangement of the shaft may substantially isolate the bearings while still providing sufficient support to regulate the flow of the fluid. In another configuration, a thru shaft may be coupled to bearings that are substantially isolated and, similar to the cantilever configuration, provide sufficient support to the shaft. Substantial isolation of the bearings may include impeding the transfer of adverse conditions to the bearings and/or drawing the adverse conditions away from the bearings. The adverse conditions may include high temperatures, corrosiveness, etc. The bearings are therefore able to operate without failures caused by the fluids. Accordingly, the valve can reliably regulate the flow of the fluid.

**FIG. 1** shows a valve 100 according to an embodiment. The valve 100 includes a motor 110, a plate 120, an isolation gasket 130, and a valve body 140 coupled together with three bolts 150. The valve body 140 includes an inlet 160 coupled to a first conduit portion (not shown) and an outlet 170 that is coupled to a second conduit portion (not shown) to form the conduit that carries a fluid to be regulated by the valve 100.

In the embodiment of FIG. 1, the motor 110 is adapted to rotate the shaft (not shown) in the valve 100. The motor 110 may be a stepper motor that rotates the shaft to particular positions to achieve a desired fluid flow rate. The motor 110 may be coupled to various systems and/or sensors that provide information on the parameters of the fluid in the valve body 140. The motor 110 may be adapted to use this information to rotate the shaft to achieve the desired fluid flow rate. Alternatively, the motor 110 may rotate the cantilevered shaft 210 to positions that are pre-determined to achieve the desired fluid flow rate without information about the fluid being carried by the conduit.

The plate 120 is an isolation means that may substantially isolate a bearing (not shown). For example, the plate 120 may be a heat sink. That is, the plate 120 may have a mass that is larger than the mass of the bearing thereby adsorbing the heat from the bearings. The plate 120 may couple the cantilevered shaft 210 to the valve body 140 via the bearing. In the depicted embodiment, the plate 120 is comprised of a material with high thermal conductivity such as aluminum. In alternative embodiments, the plate 120 may be comprised of copper or any other suitable material. The plate 120 may also be comprised of various materials such as a combination of aluminum and copper. The plate 120 is depicted as tangential to the outer surface of the valve body 140 although other orientations may be employed. The plate 120 may be further adapted to convey some adverse conditions, such as heat, away from the valve 100 as will be described in more detail later.

Still referring to FIG. 1, the isolation gasket 130 is another isolation means that may substantially isolate the bearing. The isolation gasket 130 may impede the transfer of adverse conditions by preventing the fluid from entering into the plate 120. By preventing the fluid from entering the plate 120, the bearings may not be exposed to the adverse conditions in the fluid. The isolation gasket 130 may also impede the transfer of adverse conditions by impeding a transfer of heat from the fluid to the bearing. The isolation gasket 130 is depicted as disposed between the valve body 140 and the bearings. The isolation gasket 130 may be comprised of a material with low thermal conductivity such as a ceramic. As with the plate 120, the isolation gasket 130 is disposed tangential to the valve body 140. However, alternative orientations may be employed. The isolation gasket 130 may also be shaped differently in alternative embodiments. For example, the isolation gasket 130 may be smaller than the bottom surface of the plate 120. Such alternative configurations may be selected to achieve a desired parameter, such as a rate that heat is removed from the valve body 140. Accordingly, the bearings in the valve 100 are substantially isolated.

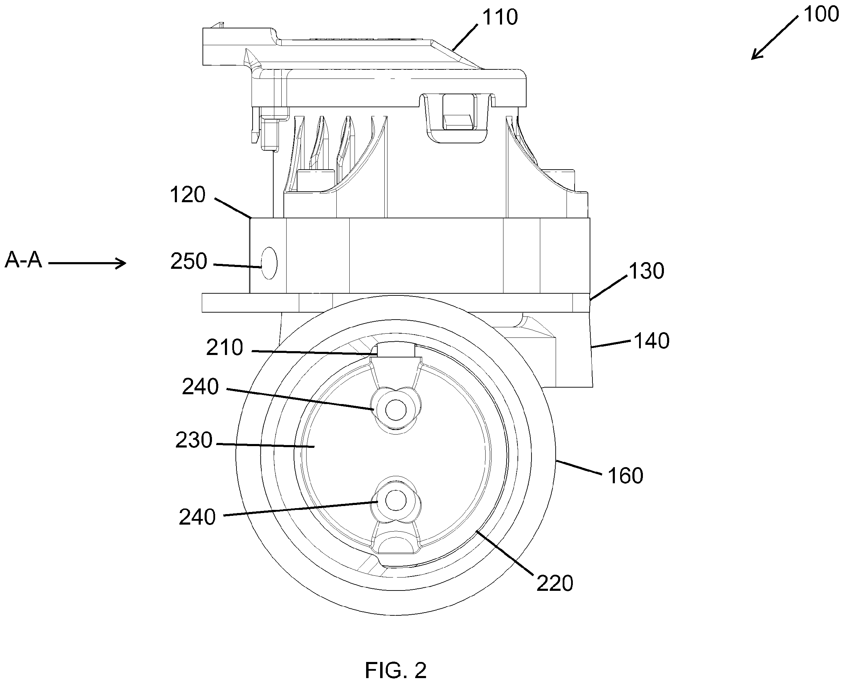

**FIG. 2** shows the valve 100 according to an embodiment. As depicted, the valve 100 includes a cantilevered shaft 210 coupled to a c-arm 220 which is coupled to a flap 230 via two couplers 240. Also depicted is a first coolant opening 250. As depicted, the cantilevered shaft 210 is coupled to the motor 110 and the plate 120 via bearings which are not shown. As can be observed by referring to FIG. 2, the valve 100 does not include bearings inside the valve body 140. Accordingly, the cantilevered shaft 210 may not be supported by a bearing inside or directly coupled to the valve body 140. The cantilevered shaft 210, the c-arm 220, the flap 230, and the couplers 240 may be comprised of any appropriate material. Since the valve body 140 may be part of the conduit that carries the fluid with the adverse conditions, the material selected may need to be resistant to corrosion and/or high temperatures. However, it may also be desirable to select material that is lightweight or has some inherent rigidity to resist flexing when the fluid flows past the cantilevered shaft 210, c-arm 220, and the flap 230 that are inside the valve body 140.

Also, the cantilevered shaft 210, the c-arm 220, the flap 230, and the couplers 240 are depicted with a cylindrical cross section. For example, the embodiments depicted in FIGS. 1 and 2 may be employed in cylindrical conduits. However, embodiments may be employed in conduits with different cross sections. For example, embodiments may be employed in conduits that have rectangular cross sections. In such conduits, embodiments may have rectangular cross sections.

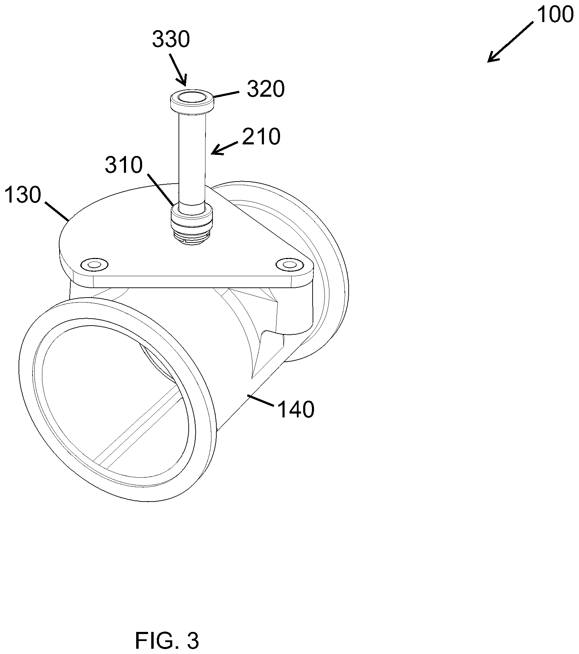

Still with reference to FIG. 2, embodiments that may substantially isolate the bearing (not shown) may not require all of the items described in the foregoing figures. For example, the isolation gasket 130 may not be required in alternative embodiments of the valve 100 to regulate fluids with corrosive fluids but moderate temperatures. Additionally or alternatively, the plate 120 may not be required when the conduit carries fluids with relatively low viscosity. These items or other items may couple the bearing to the conduit. That is, as depicted, the cantilevered shaft 210 is coupled via the bearing (not shown) to the conduit via the motor 110, the plate 120, the isolation gasket 130, and the valve body 140 which forms part of the conduit. In alternative embodiments, the cantilevered shaft 210 may be coupled to the conduit in a cantilever configuration that is coupled to the plate 120 which is coupled directly to the conduit. An exemplary cantilevered shaft 210 is described in the following with reference to FIG. 3.

**FIG. 3** shows the valve 100 according an embodiment where portions of the valve 100 depicted in FIGS. 1 and 2 are not shown for illustrative purposes. The cantilevered shaft 210 is shown as coupled to a proximate bearing 310 and an outer bearing 320. The cantilevered shaft 210 is coupled to the valve body 140 carrying the fluid with the adverse conditions in a cantilever configuration that substantially isolates the proximate bearing 310 and the outer bearing 320 from the adverse conditions.

In the depicted embodiment, the proximate bearing 310 is located above the isolation gasket 130. As discussed in the foregoing with reference to FIG. 1, the isolation gasket 130 may substantially isolate the proximate bearing 310 and the outer bearing 320 from the adverse conditions. For example, the isolation gasket 130 may substantially thermally isolate the proximate bearing 310 and the outer bearing 320. Accordingly, the temperature of the proximate bearing 310 and the outer bearing 320 may be desirably lower than the fluid temperature. The bearings may also be substantially isolated from corrosive or deteriorative effects of the fluid. In alternative embodiments, the proximate bearing 310 may have a larger inner surface that couples to the cantilevered shaft 210. For example, the bearing may be taller (when referring to the orientation shown in FIG. 3) so that the proximate bearing 310 can exert a larger moment arm on the cantilevered shaft 210 in response to forces applied by the flowing fluid to the cantilevered shaft 210.

The outer bearing 320 is depicted as coupled to the cantilevered shaft 210 at a distance from the proximate bearing 310. The distance may be sufficient to provide mechanical support for the cantilevered shaft 210 so that the cantilevered shaft 210 is desirably stable when the fluid is flowing. For example, viscous fluids flowing at a high rate may apply a substantial force to the cantilevered shaft 210. Accordingly, the outer bearing 320 is coupled to the cantilevered shaft 210 at the distance that ensures the shaft performs in the desirable manner. The embodiment depicted in FIG. 3 depicts an exemplary distance.

The outer bearing 320 is also depicted as located at a distal end 330 of the cantilevered shaft 210. By being so located, it is at a distance away from the proximate bearing 310. Such location may be desirable to maximize the distance of the outer bearing 320 from the proximate bearing 310 while still minimizing other factors such as material costs, mass of the cantilevered shaft 210, size of the valve 100, etc.

In some embodiments, the proximate bearing 310 and the outer bearing 320 may be substantially isolated by disposing the proximate bearing 310 and the outer bearing 320 outside the valve body 140 with an isolation means that does not include the plate 120 and the isolation gasket 130. The proximate bearing 310 and the outer bearing 320 may be any appropriate bearing such as roller ball or needle bearings. As mentioned in the foregoing, the proximate bearing 310 and outer bearing 320 may be low friction and reliable bearings such as deep groove ball bearings.

In alternative embodiments, the proximate bearing 310 may be coupled to the cantilevered shaft 210 without the outer bearing 320. For example, in applications involving relatively low viscous fluids with low flow rates such as a heated gas at subatmospheric pressures, the proximate bearing 310 may provide sufficient support to the shaft to regulate the flow of the fluid without an additional bearing. In the same or alternative embodiment a rotating support means such as a bushing or the motor 110 may, with the proximate bearing 310, provide sufficient support to regulate the flow of the fluid in the conduit. In such embodiments the motor 110 may be coupled directly to the cantilevered shaft 210.

These and other embodiments provide the cantilever configuration that substantially isolates the proximate bearing 310. Accordingly, the proximate bearing 310 may be selected without taking into account the adverse conditions in the fluid. For example, low friction bearings may be selected that would otherwise not be sufficiently robust to withstand the adverse conditions. Such low friction bearings may include needle or deep groove roller ball bearings. Other bearings may be employed. The bearings may also include lubricants such as grease or silicon that would otherwise corrode or deteriorate if not substantially isolated.

The cantilevered configuration may also minimize the distance of the proximate bearing 310 from the conduit while still substantially isolating the proximate bearing 310 from the adverse conditions. This minimal distance may maximize support for the cantilevered shaft 210. Maximizing support (*e.g*. maximizing the moment arm applied to the cantilevered shaft 210 by the proximate bearing 310) for the cantilevered shaft 210 may reduce the forces applied by the flowing fluid to the proximate bearing 310. By reducing the forces applied to the proximate bearing 310, the valve 100 may be more reliable.

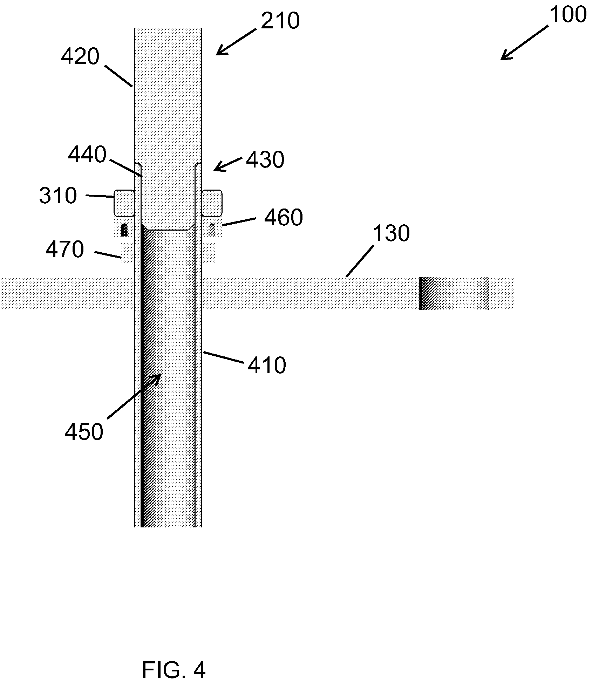

**FIG. 4** shows the valve 100 according an embodiment where the isolation gasket 130 and the proximate bearing 310 are shown without the other items shown in FIGS. 1-3. As depicted, the cantilevered shaft 210 includes an inner shaft portion 410 that is coupled to an outer shaft portion 420 at a shaft junction 430. Although the cantilevered shaft 210 is depicted as comprised of the inner shaft portion 410 and the outer shaft portion 420, the cantilevered shaft 210 may be a single shaft in alternative embodiments. The cantilevered shaft 210 is depicted as rotatably fitted through the isolation gasket 130. Accordingly, the isolation gasket 130 may provide a seal that substantially isolates the proximate bearing 310 from the adverse conditions.

The outer shaft portion 420 includes a male portion 440 that is coupled to an inside surface of the inner shaft portion 410. The outer shaft portion 420 may rotate the inner shaft portion 410 via the male portion 440 at the shaft junction 430 to regulate the flow of the fluid in the valve body 140. The inner shaft portion 410 and the outer shaft portion 420 may be comprised of any suitable material such as materials with low thermal conductivity. For example, the inner shaft portion 410 and the outer shaft portion 420 may be comprised of a ceramic material. They may also be comprised of different materials. For example, the outer shaft portion 420 may be aluminum and the inner shaft portion 410 may be ceramic.

The inner shaft portion 410 may substantially isolate the proximate bearing 310 and the outer bearing 320. For example, as depicted, the inner shaft portion 410 has a hollow 450. The hollow 450 may provide a relatively small cross section for heat transfer. This may limit the heat transfer up the shaft 210 past the isolation gasket 130. Since the heat transfer is limited, the size of the plate 120 and other things related to conveying heat away from the proximate bearing 310 and the outer bearing 320 may be minimized, simplified, eliminated, or like.

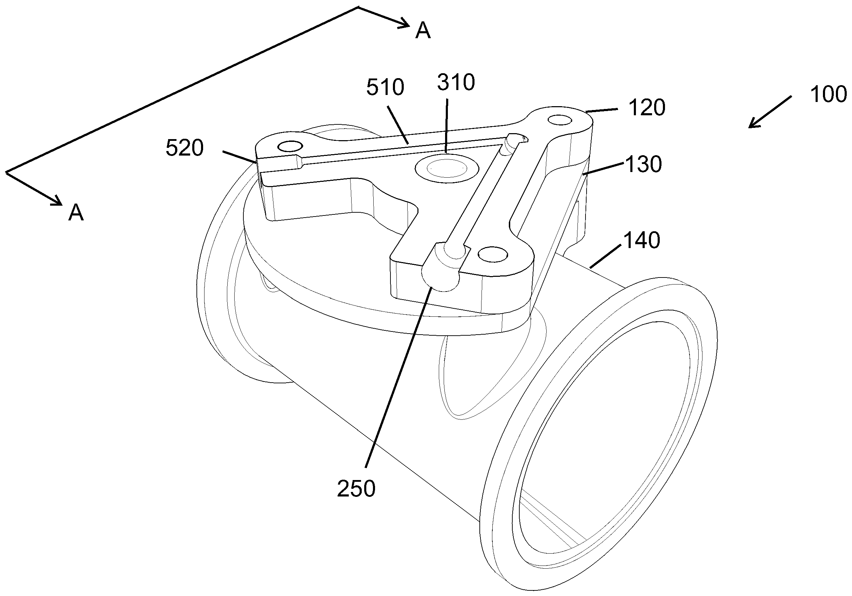

The outer shaft portion 420 may also substantially isolate the proximate bearing 310 and the outer bearing 320. For example, the outer shaft portion 420 may be a heat sink that removes heat from the proximate bearing 310 and the inner shaft portion 410. As can be seen, proximate bearing 310 may surround the inner shaft portion 410 and outer shaft portion 420 at the shaft junction 430. Such a location of the proximate bearing 310 may be desirable to optimize the heat sink capacity of the outer shaft portion 420 while minimizing the mass of the cantilevered shaft 210. The cantilevered shaft 210 may also be adapted to remove heat from the proximate bearing 310 and the outer bearing 320 as discussed in the following with reference to FIG. 5.

In addition to the isolation gasket 130, the proximate bearing 310 may be isolated from the adverse conditions additional isolation means such as a secondary seal 460 and a primary seal 470 depicted in FIG. 4. In some embodiments, the secondary seal 460 may be comprised of elastomeric lip seal and the primary seal 470 may be comprised of three steel piston rings. The secondary seal 460 and the primary seal 470 may impede the transfer of adverse conditions by providing sealing in addition to the sealing provided by the isolation gasket 130. For example, the secondary seal 460 and the primary seal 470 may impede the transfer of heat from the fluid to the proximate bearing 310. Additionally or alternatively, the secondary seal 460 and the primary seal 470 may impede fluid that flowed past the isolation gasket 130 from reaching the proximate bearing 310.

**FIG. 5** shows the valve 100 according to an embodiment taken at cross section A-A shown in FIG. 2. A fluid conduit 510 is near the proximate bearing 310 in the plate 120. The fluid conduit 510 includes the first coolant opening 250 and a second coolant opening 520. As depicted, the fluid conduit 510 is cylindrical in shape although any suitable shape may be employed. The fluid conduit 510 is also depicted with a triangular configuration. The fluid conduit 510 may be close to the proximate bearing 310. Coolant fluid in the fluid conduit 510 may draw adverse conditions away from the proximate bearing 310. The outer shaft portion 420 may rotate the inner shaft portion 410 via the male portion 440 at the shaft junction 430 to regulate the flow of the fluid in the valve body 140. It may be desirable to have the first coolant opening 250 and the second coolant opening 520 to provide an inlet and a corresponding outlet for the coolant fluid. Accordingly, the manufacturing costs associated with this triangular configuration may be less that alternative shapes such as a squares, which may require four drilling and plugging steps. Although the fluid conduit 510 conveys a coolant fluid any suitable means of drawing adverse conditions, such as heat, away from the proximate bearing 310 and the outer bearing 320 may be employed. For example, in alternative embodiments, the plate 120 may not have a fluid conduit 510. In the same or alternative embodiments, the plate 120 may have a conductor (e.g., copper coil) that is attached to radiators or other features that draw heat away from the proximate bearing 310 and the outer bearing 320.

As mentioned in the foregoing with respect to FIGS. 1-3, the plate 120 may substantially isolate the proximate bearing 310 from the adverse conditions. For example, the plate 120 may be a heat sink for the proximate bearing 310 and the outer bearing 320. The plate 120 may also remove heat from the isolation gasket 130. More specifically, plate 120 may draw heat away from the isolation gasket 130 which is then carried away by coolant fluid flowing through the fluid conduit 510 before the heat from the fluid reaches the proximate bearing 310. Accordingly, the plate 120 may impede the transfer of heat to the proximate bearing 310 and the outer bearing 320.

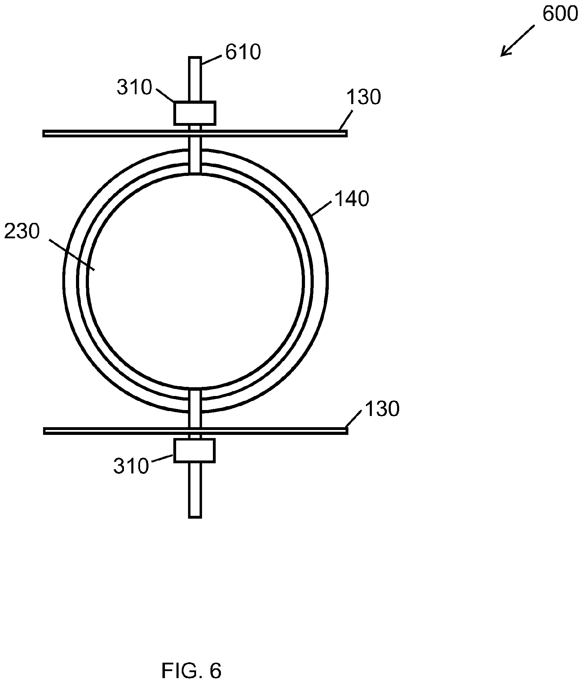

**FIG. 6** shows a valve 600 according to an embodiment. As depicted, the valve 600 may substantially isolate two proximate bearing 310. In the depicted embodiment, the valve 600 includes a thru shaft 610 that goes through the valve body 140 unlike the cantilevered shaft 210 in the cantilever beam configuration depicted in FIGS. 1-5. Similar to foregoing embodiments, the thru shaft 610 is coupled to flap 230 and rotates in the valve body 140 to regulate the flow of the fluid in the valve body 140. The valve 600 includes two isolation gaskets 130 that are adapted to substantially isolate the proximate bearing 310 from the adverse conditions. In the depicted embodiment, the thru shaft 610 may be comprised of two outer shaft portions 420 and an inner shaft portion 410 that is in the valve body 140. Although not depicted, the valve 600 may also include one or more plate 120 in alternative embodiments. The valve 600 may also include one or more motors 110 or outer bearings 320 coupled to the thru shaft 610.

The embodiments described above provide an improved valve. For example, the plate 120 may substantially isolate the proximate bearing 310 and the outer bearing 320 by removing heat from the proximate bearing 310 and the outer bearing 320. The isolation gasket 130 may substantially isolate the proximate bearing 310 and the outer bearing 320 from the adverse conditions in the fluid by insulating the bottom of the plate 120 from the valve body 140 thereby limiting the cross sectional area available for heat transfer. The isolation gasket 130 may also provide a fluid seal that substantially isolates the fluid with the adverse conditions from the proximate bearing 310 and the outer bearing 320.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the present description. It will also be apparent to those of ordinary skill in the art that the above-described embodiments may be combined in whole or in part to create additional embodiments within the scope and teachings of the present description.

Thus, although specific embodiments are described herein for illustrative purposes, various equivalent modifications are possible within the scope of the present description, as those skilled in the relevant art will recognize. The teachings provided herein can be applied to other valves, and not just to the embodiments described above and shown in the accompanying figures. Accordingly, the scope of the embodiments described above should be determined from the following claims.

## Claims

1. A valve (100, 600) comprising:
a valve body (140) forming a portion of a fluid conduit;
a shaft (210, 610) disposed through a wall of the fluid conduit;
a fluid flow regulating means (230) coupled to the shaft (210, 610) inside the fluid conduit;
a rotatable support means (110, 320) coupled to the shaft (210, 610) outside the wall of the fluid conduit; and
a proximate bearing (310) coupled to the shaft (210, 610) at a distance from the rotatable support means (110, 320) wherein the proximate bearing (310) is coupled to the conduit via one or more isolation means (120, 130), wherein the one or more isolation means (120, 130) includes a plate (120) and an isolation gasket (130), and
wherein the shaft comprises an inner shaft portion (410) disposed inside of the fluid conduit and an outer shaft portion (420) disposed outside of the fluid conduit and wherein the inner shaft portion (410) includes a hollow (450) and is configured to prevent the fluid in the fluid conduit from entering the hollow (450).

2. The valve (100, 600) of claim 1 wherein the shaft (210, 610) comprises a cantilevered shaft (210) or a thru shaft (610) configuration.

3. The valve (100, 600) of claim 1 wherein the rotatable support means (110, 320) is coupled to the shaft (210, 610) at a distal end (330) of the shaft (210, 610).

4. The valve (100, 600) of claim 1 wherein the inner shaft portion (410) includes a material selected to substantially isolate the proximate bearing (310).

5. The valve (100, 600) of claim 1 wherein the inner shaft portion (410) is coupled to the outer shaft portion (420) at a shaft junction (230).

6. The valve (100, 600) of claim 5 wherein the proximate bearing (310) is coupled to the shaft (210, 610) at the shaft junction (230).

7. The valve (100, 600) of claim 1 further comprising a secondary seal (460) and a primary seal (470) coupled to the shaft (210, 610) between the proximate bearing (310) and the fluid conduit.

8. The valve (100, 600) of claim 1 wherein the proximate bearing (310) is coupled to the valve body (140) that forms a portion of the fluid conduit via one or more isolation means (120, 130).

9. The valve (100, 600) of claim 1 wherein the rotatable support means (110, 320) comprises one or more motors (110) or one or more outer bearings (320).

10. The valve (100, 600) of claim 1 wherein the fluid flow regulating means (230) in the fluid conduit comprises a c-arm (220) coupled to the fluid flow regulating means (230) and the shaft (210, 610).

11. A method of forming a valve (100, 600) the method comprising:
forming a valve body (140) with a portion of a fluid conduit;
forming and disposing a shaft (210, 610) through a wall of the conduit;
forming and coupling a fluid flow regulating means (230) to the shaft (210, 610) inside the conduit;
forming and coupling a rotatable support means (110, 320) to the shaft (210, 610) outside the wall of the conduit; and
forming and coupling a proximate bearing (310) to the shaft (210, 610) at a distance from the rotatable support means (110, 320) and coupling the proximate bearing (310) to the fluid conduit via one or more isolation means (120, 130), wherein
forming one or more isolation means (120, 130) includes forming a plate (120) and forming an isolation gasket (130), and wherein
forming the shaft (210, 610) comprises forming an inner shaft portion (410) disposed inside of the fluid conduit and
an outer shaft portion (420) disposed outside of the fluid conduit and
wherein forming the inner shaft portion (410) includes forming a hollow (450) and configuring the inner shaft portion (410) to prevent the fluid from entering the hollow (450).

12. The method of claim 11 wherein forming the shaft (210, 610) comprises forming a cantilevered shaft (210) or forming a thru shaft (610) configuration.

13. The method of claim 11 wherein coupling the rotatable support means (110, 320) to the shaft (210, 610) comprises coupling the rotatable support means (110, 320) to the shaft (210, 610) at a distal end (330) of the shaft (210, 610).

14. The method of claim 11 wherein forming the inner shaft portion (410) includes selecting a material to substantially isolate the proximate bearing (310).

15. The method of claim 11 wherein forming the inner shaft portion (410) and the outer shaft portion (420) includes coupling the inner shaft portion (410) and the outer shaft portion (420) at a shaft junction (230).

16. The method of claim 11 wherein forming the valve (100, 600) further comprises coupling the proximate bearing (310) to the shaft (210, 610) at the shaft junction (230).

17. The method of claim 11 wherein forming the valve (100, 600) further comprises forming and coupling a secondary seal (460) and a primary seal (470) to the shaft (210, 610) between the proximate bearing (310) and the fluid conduit.

18. The method of claim 11 wherein coupling the proximate bearing (310) to the fluid conduit via one or more isolation means (120, 130) comprises coupling the proximate bearing (310) via one or more isolation means (120, 130) to the valve body (140) that forms a portion of the fluid conduit.

19. The method of claim 11 wherein forming the rotatable support means (110, 320) comprises forming one or more motors (110) or one or more outer bearings (320).

20. The method of claim 11 wherein coupling the fluid flow regulating means (230) to the shaft (210, 610) comprises coupling the fluid flow regulating means (230) to the shaft (210, 610) via a c-arm (220).

21. A method of operating a valve (100, 600) comprising a valve body (140) forming a fluid conduit the method comprising:
regulating the flowing fluid with a fluid flow regulating means (230) by rotating a shaft (210, 610) coupled to the fluid conduit via a proximate bearing (310)
wherein the proximate bearing (310) is coupled to the fluid conduit via one or more isolation means (120, 130),
wherein the one or more isolation means (120, 130) includes a plate (120) and an isolation gasket (130), and
wherein the shaft comprises an inner shaft portion (410) disposed inside of the fluid conduit and an outer shaft portion (420) disposed outside of the fluid conduit and
wherein the inner shaft portion (410) includes a hollow (450) and is configured to prevent the fluid in the fluid conduit from entering the hollow (450) such that method of operating the valve (100, 600) includes drawing an adverse condition away from the proximate bearing (310) with the one or more isolation means (120, 130), and
impeding a transfer of an adverse condition to the proximate bearing (310).

## Patentansprüche

1. Ventil (100, 600), das aufweist:
einen Ventilkörper (140), der einen Abschnitt einer Fluidleitung bildet;
eine Welle (210, 610), die durch eine Wand der Fluidleitung hindurch angeordnet ist;
ein Fluidströmungs-Regulierungsmittel (230), das mit der Welle (210, 610) innerhalb der Fluidleitung gekoppelt ist;
ein drehbares Stützmittel (110, 320), das mit der Welle (210, 610) außerhalb der Wand der Fluidleitung gekoppelt ist; und
ein benachbartes Lager (310), das mit der Welle (210, 610) in einem Abstand von dem drehbaren Stützmittel (110, 320) gekoppelt ist, wobei das benachbarte Lager (310) mit der Leitung über ein oder mehrere Isoliermittel (120, 130) gekoppelt ist, wobei das eine oder die mehreren Isoliermittel (120, 130) eine Platte (120) und eine Isolierdichtung (130) aufweisen, und
wobei die Welle einen inneren Wellenabschnitt (410), der innerhalb der Fluidleitung angeordnet ist, und einen äußeren Wellenabschnitt (420), der außerhalb der Fluidleitung angeordnet ist, aufweist, und wobei der innere Wellenabschnitt (410) einen Hohlraum (450) aufweist und so konfiguriert ist, dass er das Fluid in der Fluidleitung am Eintritt in den Hohlraum (450) hindert.

2. Ventil (100, 600) nach Anspruch 1, wobei die Welle (210, 610) eine Konfiguration mit freitragender Welle (210) oder durchgehender Welle (610) aufweist.

3. Ventil (100, 600) nach Anspruch 1, wobei das drehbare Stützmittel (110, 320) mit der Welle (210, 610) an einem distalen Ende (330) der Welle (210, 610) gekoppelt ist.

4. Ventil (100, 600) nach Anspruch 1, wobei der innere Wellenabschnitt (410) ein Material aufweist, das so ausgewählt ist, dass es das benachbarte Lager (310) im Wesentlichen isoliert.

5. Ventil (100, 600) nach Anspruch 1, wobei der innere Wellenabschnitt (410) mit dem äußeren Wellenabschnitt (420) an einem Wellenübergang (230) gekoppelt ist.

6. Ventil (100, 600) nach Anspruch 5, wobei das benachbarte Lager (310) mit der Welle (210, 610) am Wellenübergang (230) gekoppelt ist.

7. Ventil (100, 600) nach Anspruch 1, weiterhin mit einer Sekundärabdichtung (460) und einer Primärabdichtung (470), die mit der Welle (210, 610) zwischen dem benachbarten Lager (310) und der Fluidleitung gekoppelt sind.

8. Ventil (100, 600) nach Anspruch 1, wobei das benachbarte Lager (310) mit dem Ventilkörper (140), der einen Abschnitt der Fluidleitung bildet, über ein oder mehrere Isoliermittel (120, 130) gekoppelt ist.

9. Ventil (100, 600) nach Anspruch 1, wobei das drehbare Stützmittel (110, 320) einen oder mehrere Motoren (110) oder ein oder mehrere Außenlager (320) aufweist.

10. Ventil (100, 600) nach Anspruch 1, wobei das Fluidströmungs-Regulierungsmittel (230) in der Fluidleitung einen C-Arm (220) aufweist, der mit dem Fluidströmungs-Regulierungsmittel (230) und der Welle (210, 610) gekoppelt ist.

11. Verfahren zum Bilden eines Ventils (100, 600), wobei das Verfahren aufweist:
Bilden eines Ventilkörpers (140) mit einem Abschnitt einer Fluidleitung;
Bilden und Anordnen einer Welle (210, 610) durch eine Wand der Leitung hindurch;
Bilden und Koppeln eines Fluidströmungs-Regulierungsmittels (230) mit der Welle (210, 610) innerhalb der Leitung;
Bilden und Koppeln eines drehbaren Stützmittels (110, 320) mit der Welle (210, 610) außerhalb der Wand der Leitung; und
Bilden und Koppeln eines benachbarten Lagers (310) mit der Welle (210, 610) in einem Abstand von dem drehbaren Stützmittel (110, 320) sowie Koppeln des benachbarten Lagers (310) mit der Fluidleitung über ein oder mehrere Isoliermittel (120, 130), wobei
das Bilden eines oder mehrerer Isoliermittel (120, 130) aufweist: Bilden einer Platte (120) und Bilden einer Isolierdichtung (130), und wobei
das Bilden der Welle (210, 610) aufweist: Bilden eines inneren Wellenabschnitts (410), der innerhalb der Fluidleitung angeordnet ist, und
eines äußeren Wellenabschnitts (420), der außerhalb der Fluidleitung angeordnet ist, und
wobei das Bilden des inneren Wellenabschnitts (410) aufweist: Bilden eines Hohlraums (450) und Konfigurieren des inneren Wellenabschnitts (410), um das Fluid am Eintritt in den Hohlraum (450) zu hindern.

12. Verfahren nach Anspruch 11, wobei das Bilden der Welle (210, 610) aufweist:
Bilden einer Konfiguration mit freitragender Welle (210) oder durchgehender Welle (610).

13. Verfahren nach Anspruch 11, wobei das Koppeln des drehbaren Stützmittels (110, 320) mit der Welle (210, 610) aufweist: Koppeln des drehbaren Stützmittels (110, 320) mit der Welle (210, 610) an einem distalen Ende (330) der Welle (210, 610).

14. Verfahren nach Anspruch 11, wobei das Bilden des inneren Wellenabschnitts (410) aufweist: Auswählen eines Materials, um das benachbarte Lager (310) im Wesentlichen zu isolieren.

15. Verfahren nach Anspruch 11, wobei das Bilden des inneren Wellenabschnitts (410) und des äußeren Wellenabschnitts (420) aufweist: Koppeln des inneren Wellenabschnitts (410) und des äußeren Wellenabschnitts (420) an einem Wellenübergang (230).

16. Verfahren nach Anspruch 11, wobei das Bilden des Ventils (100, 600) weiterhin aufweist: Koppeln des benachbarten Lagers (310) mit der Welle (210, 610) am Wellenübergang (230).

17. Verfahren nach Anspruch 11, wobei das Bilden des Ventils (100, 600) weiterhin aufweist: Bilden und Koppeln einer Sekundärabdichtung (460) und einer Primärabdichtung (470) mit der Welle (210, 610) zwischen dem benachbarten Lager (310) und der Fluidleitung.

18. Verfahren nach Anspruch 11, wobei das Koppeln des benachbarten Lagers (310) mit der Fluidleitung über eine oder mehrere Isoliermittel (120, 130) aufweist:
Koppeln des benachbarten Lagers (310) über eine oder mehrere Isoliermittel (120, 130) mit dem Ventilkörper (140), der einen Abschnitt der Fluidleitung bildet.

19. Verfahren nach Anspruch 11, wobei das Bilden des drehbaren Stützmittels (110, 320) aufweist: Bilden eines oder mehrerer Motoren (110) oder eines oder mehrerer Außenlager (320).

20. Verfahren nach Anspruch 11, wobei das Koppeln des Fluidströmungs-Regulierungsmittels (230) mit der Welle (210, 610) aufweist: Koppeln des Fluidströmungs-Regulierungsmittels (230) mit der Welle (210, 610) über einen C-Arm (220).

21. Verfahren zum Betätigen eines Ventils (100, 600) mit einem Ventilkörper (140), der eine Fluidleitung bildet, wobei das Verfahren aufweist:
Regulieren des strömenden Fluids mit einem Fluidströmungs-Regulierungsmittel (230) durch Drehen einer Welle (210, 610), die mit der Fluidleitung über ein benachbartes Lager (310) gekoppelt ist, wobei das benachbarte Lager (310) mit der Fluidleitung über ein oder mehrere Isoliermittel (120, 130) gekoppelt ist,
wobei das eine oder die mehreren Isoliermittel (120, 130) eine Platte (120) und eine Isolierdichtung (130) aufweisen und
wobei die Welle einen inneren Wellenabschnitt (410), der innerhalb der Fluidleitung angeordnet ist, und einen äußeren Wellenabschnitt (420), der außerhalb der Fluidleitung angeordnet ist, aufweist, und
wobei der innere Wellenabschnitt (410) einen Hohlraum (450) aufweist und so konfiguriert ist, dass er das Fluid in der Fluidleitung am Eintritt in den Hohlraum (450) hindert, so dass das Verfahren zum Betätigen des Ventils (100, 600) aufweist:
Wegführen einer ungünstigen Bedingung vom benachbarten Lager (310) mit dem einen oder den mehreren Isoliermitteln (120, 130) und
Behindern einer Weiterleitung einer ungünstigen Bedingung zum benachbarten Lager (310).

## Revendications

1. Vanne (100, 600) comprenant :
un corps de vanne (140) formant une partie d'un conduit de fluide ;
un arbre (210, 610) disposé à travers une paroi du conduit de fluide ;
un moyen de régulation d'écoulement de fluide (230) couplé à l'arbre (210, 610) à l'intérieur du conduit de fluide ;
un moyen de support rotatif (110, 320) couplé à l'arbre (210, 610) à l'extérieur de la paroi du conduit de fluide ; et
un palier proximal (310) couplé à l'arbre (210, 610) à une certaine distance du moyen de support rotatif (110, 320), dans laquelle le palier proximal (310) est couplé au conduit via un ou plusieurs moyens d'isolation (120, 130), dans laquelle les un ou plusieurs moyens d'isolation (120, 130) comprennent une plaque (120) et un joint d'isolation (130), et
dans laquelle l'arbre comprend une partie d'arbre interne (410) disposée à l'intérieur du conduit de fluide et une partie d'arbre externe (420) disposée à l'extérieur du conduit de fluide et dans laquelle la partie d'arbre interne (410) comprend un creux (450) et est configurée pour empêcher le fluide dans le conduit de fluide, d'entrer dans le creux (450).

2. Vanne (100, 600) selon la revendication 1, dans laquelle l'arbre (210, 610) comprend un arbre en porte-à-faux (210) ou une configuration d'arbre débouchant (610).

3. Vanne (100, 600) selon la revendication 1, dans laquelle le moyen de support rotatif (110, 320) est couplé à l'arbre (210, 610) au niveau d'un extrémité distale (330) de l'arbre (210, 610).

4. Vanne (100, 600) selon la revendication 1, dans laquelle la partie d'arbre interne (410) comprend un matériau sélectionné pour isoler sensiblement le palier proximal (310).

5. Vanne (100, 600) selon la revendication 1, dans laquelle la partie d'arbre interne (410) est couplée à la partie d'arbre externe (420) au niveau d'une jonction d'arbre (230).

6. Vanne (100, 600) selon la revendication 5, dans laquelle le palier proximal (310) est couplé à l'arbre (210, 610) au niveau de la jonction d'arbre (230).

7. Vanne (100, 600) selon la revendication 1, comprenant en outre un joint d'étanchéité secondaire (460) et un joint d'étanchéité principal (470) couplé à l'arbre (210, 610) entre le palier proximal (310) et le conduit de fluide.

8. Vanne (100, 600) selon la revendication 1, dans laquelle le palier proximal (310) est couplé au corps de vanne (140) qui forme une partie du conduit de fluide via un ou plusieurs moyens d'isolation (120, 130).

9. Vanne (100, 600) selon la revendication 1, dans laquelle le moyen de support rotatif (110, 320) comprend un ou plusieurs moteurs (110) ou un ou plusieurs paliers externes (320).

10. Vanne (100, 600) selon la revendication 1, dans laquelle le moyen de régulation d'écoulement de fluide (230) dans le conduit de fluide comprend un bras en c (220) couplé au moyen de régulation d'écoulement de fluide (230) et à l'arbre (210, 610).

11. Procédé pour former une vanne (100, 600), le procédé comprenant les étapes consistant à :
former un corps de vanne (140) avec une partie d'un conduit de fluide ;
former et disposer un arbre (210, 610) à travers une paroi du conduit ;
former et coupler un moyen de régulation d'écoulement de fluide (230) à l'arbre (210, 610) à l'intérieur du conduit ;
former et coupler un moyen de support rotatif (110, 320) à l'arbre (210, 610) à l'extérieur de la paroi du conduit ; et
former et coupler un palier proximal (310) à l'arbre (210, 610) à une certaine distance du moyen de support rotatif (110, 320) et coupler le palier proximal (310) au conduit de fluide via un ou plusieurs moyens d'isolation (120, 130), dans lequel :
la formation d'un ou de plusieurs moyens d'isolation (120, 130) comprend les étapes consistant à former une plaque (120) et former un joint d'isolation (130), et dans lequel :
la formation de l'arbre (210, 610) comprend l'étape consistant à former une partie d'arbre interne (410) disposée à l'intérieur du conduit de fluide, et
une partie d'arbre externe (420) disposée à l'extérieur du conduit de fluide, et
dans lequel la formation de la partie d'arbre interne (410) comprend les étapes consistant à former un creux (450) et configurer la partie d'arbre interne (410) pour empêcher le fluide d'entrer dans le creux (450).

12. Procédé selon la revendication 11, dans lequel la formation de l'arbre (210, 610) comprend les étapes consistant à former un arbre en porte-à-faux (210) ou former une configuration d'arbre débouchant (610).

13. Procédé selon la revendication 11, dans lequel l'étape consistant à coupler le moyen de support rotatif (110, 320) à l'arbre (210, 610) comprend l'étape consistant à coupler le moyen de support rotatif (110, 320) à l'arbre (210, 610) au niveau d'une extrémité distale (330) de l'arbre (210, 610).

14. Procédé selon la revendication 11, dans lequel l'étape consistant à former la partie d'arbre interne (410) comprend l'étape consistant à sélectionner un matériau pour isoler sensiblement le palier proximal (310).

15. Procédé selon la revendication 11, dans lequel l'étape consistant à former la partie d'arbre interne (410) et la partie d'arbre externe (420) comprend l'étape consistant à coupler la partie d'arbre interne (410) et la partie d'arbre externe (420) au niveau d'une jonction d'arbre (230).

16. Procédé selon la revendication 11, dans lequel l'étape consistant à former la vanne (100, 600) comprend en outre l'étape consistant à coupler le palier proximal (310) à l'arbre (210, 610) au niveau de la jonction d'arbre (230).

17. Procédé selon la revendication 11, dans lequel l'étape consistant à former la vanne (100, 600) comprend en outre les étapes consistant à former et à coupler un joint d'étanchéité secondaire (460) et un joint d'étanchéité principal (470) à l'arbre (210, 610) entre le palier proximal (310) et le conduit de fluide.

18. Procédé selon la revendication 11, dans lequel l'étape consistant à coupler le palier proximal (310) au conduit de fluide via un ou plusieurs moyens d'isolation (120, 130) comprend l'étape consistant à coupler le palier proximal (310) via un ou plusieurs moyens d'isolation (120, 130) au corps de vanne (140) qui forme une partie du conduit de fluide.

19. Procédé selon la revendication 11, dans lequel l'étape consistant à former le moyen de support rotatif (110, 320) comprend l'étape consistant à former un ou plusieurs moteurs (110) ou un ou plusieurs paliers externes (320).

20. Procédé selon la revendication 11, dans lequel l'étape consistant à coupler le moyen de régulation d'écoulement de fluide (230) à l'arbre (210, 610) comprend l'étape consistant à coupler le moyen de régulation d'écoulement de fluide (230) à l'arbre (210, 610) via un bras en c (220).

21. Procédé pour exploiter une vanne (100, 600) comprenant un corps de vanne (140) formant un conduit de fluide, le procédé comprenant l'étape consistant à :
réguler le fluide qui s'écoule avec un moyen de régulation d'écoulement de fluide (230) en faisant tourner un arbre (210, 610) couplé au conduit de fluide via un palier proximal (310), dans lequel le palier proximal (310) est couplé au conduit de fluide via un ou plusieurs moyens d'isolation (120, 130),
dans lequel les un ou plusieurs moyens d'isolation (120, 130) comprennent une plaque (120) et un joint d'isolation (130), et
dans lequel l'arbre comprend une partie d'arbre interne (410) disposée à l'intérieur du conduit de fluide et une partie d'arbre externe (420) disposée à l'extérieur du conduit de fluide, et
dans lequel la partie d'arbre interne (410) comprend un creux (450) et est configurée pour empêcher le fluide dans le conduit de fluide, d'entrer dans le creux (450) de sorte que le procédé de commande de la vanne (100, 600) comprend l'étape consistant à éloigner une condition indésirable du palier proximal (310) avec les un ou plusieurs moyens d'isolation (120, 130), et
empêcher un transfert d'une condition indésirable au palier proximal (310).
